# EUROPEAN PATENT APPLICATION

(11) **EP 2 468 468 A1**
(43) Date of publication of application: **27.06.2012**
(21) Application number: 10809587.8
(22) Date of filing: 24.06.2010
(51) Int. Cl.: B29B 17/00, A47L 13/022, B62B 1/00, D06F 57/00, D06F 83/00

(54) **STRUCTURAL PROFILE MEMBERS FOR PRODUCING HOUSEHOLD UTENSILS, AND METHOD FOR PRODUCING SAID PROFILE MEMBERS**

(30) Priority: 17.08.2009 ES 200930601
(71) Applicant: SP Kloner Ecotec S.L., 46960 Aldaia Valencia (ES)
(72) Inventor: CAMPOS BECEIRO, Alberto, E-46960 Aldaia (Valencia) (ES)
(74) Representative: Ungria Lopez, Javier
(86) International application number: PCT/ES2010/070427
(87) International publication number: WO 2011/020937

(57) **Abstract**

These structural profile members, such as handles, supports, frames and legs for ironing boards, indoor and outdoor clothes drying racks, etc., are obtained from recycled plastic materials.

The plastic structural profiles members have as their main component a polymer with a high elastic modulus such as PET, polyamide, ABS, etc., and waste from materials containing fibreglass.

The structural profile members are produced by kneading and subsequent extrusion.

## Description

### OBJECT OF THE INVENTION

The present invention, as stated in the title of this specification, relates to structural profile members for producing household utensils and a method for producing said structural profile members.

These are structural profile members for producing household utensils and furniture, including broom and mop handles; supports, frames and legs of ironing boards, indoor and outdoor clothes drying racks, shopping carts, cleaning carts, garden furniture, etc.

The structural profile members of the invention are produced using materials obtained from plastic waste in which the main component is a high elastic modulus polymer such as PET, polyamide, ABS, etc., and waste from fibres with a high elastic modulus such as fibreglass, carbon, boron, basalt, aramid fibres, etc.

These structural profile members are obtained by kneading and subsequent extrusion with some special features.

### BACKGROUND OF THE INVENTION

The structural profile members currently used to produce household utensils such as broom and mop handles are made in steel, aluminium or wood, and generally have a diameter of about 22 mm. Steel structural profile members are common due to their low cost and weight, which make them very easy to handle.

The properties sought after in these handles are the following:
1.- Ergonomic properties.
   a.- light.
   b.- easy to handle.
   c.- handle adaptable to user's hands.
2.- Mechanical properties.
   a.- non-bending.
   b. corrosion resistance.
   c.- durability.

The structural profile members used as structural elements in other household utensils, such as ironing boards, profiles clothes drying racks, shopping carts, cleaning carts, are usually made in steel or aluminium since these materials are resistant to bending and can be welded.

On the other hand, there are many waste products in the market from food packaging, mainly PET mixed or not with other polymers such as PE or PP and occasionally barrier polymers such as EVOH, and there are also large amounts of ABS residues from the casings of household appliances and computer equipment.

Due to their difficult elimination, there are also in the market large amounts of waste from fibres with a high elastic modulus such as fibreglass or carbon fibres from their own production or their use in the manufacture of composite materials before and after their impregnation with the resins used in the manufacture of such composite materials, such as unsaturated polyester or epoxy resins. There is also a lot of waste from the composite materials themselves once they are past their lifetime.

This waste is difficult to recycle, and thus poses a serious environmental problem and is abundant and cheap.

### DESCRIPTION OF THE INVENTION

The structural profile members for the manufacture of household utensils such as broom and mop handles are **characterised in that** they are produced at least partially with first waste and preferably with waste from bottles and other PET items and with waste from remnants of fibreglass tissue.

This first waste comprises parts of materials such as those described in the background of the invention section.

The structural profile members produced with the waste composition described have the following advantages with respect to those already present in the market:
- they can be produced in larger diameters, with a great improvement in ergonomics, without a substantial increase in weight.
- they are notably cheaper.
- they do not rust, since there is not metal in their composition.
- they can be recycled again at the end of their lifetime.
- they are environmentally friendly since they favour the recycling of both the polymers mentioned above and of fibreglass waste.

More specifically, the composition of the structural profile members of the invention for handles is the following.

The central tube comprises between 30 and 70% of fibreglass and preferably between 40 and 60% of fibreglass.

Between 30 and 70% of PET waste that may contain up to 20% of PE in order to improve its impact resistance. Preferably between 40 and 60% of PET.

In the event that the waste contains proportions of more than 5% of other non-polar polymers such as PE or PP, an adhesive polymer would be added. In a preferred embodiment, the adhesive polymer of the outer and inner layers of the corresponding container or estructural profile member of this invention will be chosen from the group comprising:
- polyethylene, polypropylene polymers containing grafted polar groups or a mixture of both;
- ethylene and acrylic or methacrylic acid copolymers;
- ethylene and acrylate or acetate copolymers;
- glycidyl methacrylate derivatives and
- styrene-ethylene-butadiene-styrene (SEBS) copolymers containing grafted groups.

In a more preferred embodiment, the grafted polar groups are maleic anhydride or acrylic acid. In an even more preferred embodiment, the grafted polar groups are in a proportion of less than 15% by weight with respect to the adhesive polymer.

In another preferred embodiment, the grafted polar group is maleic anhydride in a proportion of less than 5% by weight of the adhesive polymer. In an even more preferred embodiment, the proportion of maleic anhydride is of less than 3% by weight.

In another preferred embodiment, the grafted polar group is acrylic acid in a proportion of less than 7% by weight of the adhesive polymer.

The process for obtaining the tubular structural profile members to be used as handles for brooms and the like with the recycled materials defined includes the following steps:

A first step for the pre-treatment of the raw materials.

In this first step, the polymer waste must ground with adequate mills for these materials and cleaned using known cleaning/drying technologies or dry cleaning by air blast.

Fibreglass, if presented as remnant pieces, must be cut to a size of about 3 to 20 mm, preferably between 5 and 15 mm, so that it can then be fed as a continuous dose to an extrusion machine. If it comes from resin composites, these must be ground until defibred, so that the resin is reduced to a powder and the glass fibres are reduced to a size of between 1 to 10 mm. We shall use the whole composite without separating its two components.

A second kneading step.

In this step the extrusion of the pre-treated materials can be performed by molten kneading using known equipment such as those provided with two screw extrusion machines (co-rotating or not), although this is not totally limited to this possibility. Amongst other possibilities there are also double spindle extrusion machines. On the other hand, it may be preferable to use equipment with a single spindle extrusion machine after an intensive mixing or kneading unit that performs granulate kneading and extrusion.

Another possibility is an extrusion/mixing machine, preferably with co-rotating spindles and preferably with intermediate gas extraction by a vacuum pump, with other types of multiple spindle extrusion/mixing machines also being suitable for PET.

Depending on the composition of the polymer waste used, especially if these are polar and nonpolar polymer mixtures such as PET + PE or PET + PP, the extrusion step may require the use of an adhesive polymer of those already known and existing in the market to facilitate bonding between the polymers of differing polarity.

A third co-extrusion step.

In this step, having obtained the homogenised mixture of components, we can give it the final shape for the estructural profile member, either as a circular crown or any other geometric shape such as hexagonal, octagonal, ellipsoidal, etc., that provides greater ergonomic design for holding or responds to the design of the utensil, either in a separate process in a structural profile members extrusion line starting from the mixture as pellets or preferably after the kneading process with or without the aid of a melt pump in order to increase the pressure in the extrusion nozzle if necessary.

In order to embellish the surface of the structural profile member and provide it with elements that favour its grip or that are required for subsequent assembly operations, the extrusion nozzle will preferably have two or more layers in co-extrusion covering the handle either totally or partially with polymers of different nature that may be coloured or not, such as PET, PP, PC, TPE (thermoplastic elastomers).

These coating layers may also be applied after extrusion of the structural profile member using known structural profile members coating technologies using thermoplastic materials or using immersion or spray or other known coating methods with lacquer or paints.

A first specific example of a handle is the following:
- Circular central section:
   - Diameter 26 mm,
      - Wall thickness 1.8 mm,
- Composition:
   - PET flakes from bottles 48%,
   - Cut fibreglass tissue waste 48%,
   - Dupont Elvaloy PTW compatibilising additive: 2%,
- Coating:
   - PET flakes from bottles with pigment,
   - Thickness 0.2 mm,
   - Total weight 212 g/m,
   - Elastic modulus of the structural profile member 15 Gpa,

A second specific example of another handle is the following:
- Circular central section:
   - Diameter 26 mm,
   - Wall thickness 1.8 mm,
- Composition:
   - Flakes from pizza packaging formed by 75% PET, 20% PE and 5% EVOH: 47%,
   - Cut fibreglass tissue waste: 50%,
   - Dupont Elvaloy PTW compatibilising additive: 3%.
- Coating:
   - PET flakes from bottles with pigment,
   - Thickness: 0.2 mm,
   - Total weight: 216 g/m,
   - Elastic modulus of the structural profile member: 9.7 Gpa.

On the other hand, although the abbreviations used for the polymers are known internationally, we shall now describe each one:

PP, polypropylene; PE polyethylene; PEHD high-density polyethylene; PELD low-density polyethylene; PC, polycarbonate; PET polyethylene terephthalate; ABS, acrylonitrile.

## Claims

1. Structural profile members for producing household utensils, **characterised in that** they are integrally produced with materials from plastic waste in which their main component is a polymer with a high elastic modulus, such as PET, polyamide, ABS, etc., and waste from materials containing fibreglass.

2. Structural profile members for producing household utensils according to claim 1, **characterised in that** the composition of the structural profile members comprises:
- between 30 and 70% of fibreglass waste;
- between 30 and 70% of PET waste;

3. Structural profile members for producing household utensils according to claim 1, **characterised in that** the composition of the structural profile members comprises:
- between 30 and 70% of fibreglass waste;
- between 40 and 60% of PET waste.

4. Structural profile members for producing household utensils according to any of the previous claims, **characterised in that** they also include:
- waste containing other nonpolar polymers such as PE or PP.

5. Structural profile members for producing household utensils according to claim 4, **characterised in that** when they incorporate proportions of more than 5% of nonpolar polymers such as PE or PP, an adhesive polymer will be added.

6. Structural profile members for producing household utensils according to claim 5, **characterised in that** the adhesive polymer will be chosen from a group that comprises:
- polyethylene polymers, polypropylene containing grafted polar groups or mixtures of both;
- ethylene and acrylic or methacrylic acid copolymers;
- ethylene and acrylate or acetate copolymers;
- glycidyl methacrylate derivatives and
- styrene-ethylene-butadiene-styrene (SEBS) copolymers containing grafted groups.

7. Structural profile members for producing household utensils according to claim 6, **characterised in that** the grafted polar groups are maleic anhydride.

8. Structural profile members for producing household utensils according to claim 6, **characterised in that** the grafted polar groups are acrylic acid.

9. Structural profile members for producing household utensils according to claim 6, **characterised in that** the grafted polar groups are in a proportion of less than 15% by weight with respect to the adhesive polymer.

10. Structural profile members for producing household utensils according to claim 6, **characterised in that** the grafted polar group is maleic anhydride in a proportion of less than 5% by weight of the adhesive polymer.

11. Structural profile members for producing household utensils according to claim 6, **characterised in that** the grafted polar group is maleic anhydride in a proportion of less than 3% by weight of the adhesive polymer.

12. Structural profile members for producing household utensils according to claim 6, **characterised in that** the grafted polar group is acrylic acid in a proportion of less than 7% by weight of the adhesive polymer.

13. Structural profile members for producing household utensils according to claim 4, **characterised in that** they contain up to 20% of PE.

14. A method for producing structural profile members for producing household utensils comprising the following steps:
- a first step for the pre-treatment of polymer waste by milling and cleaning using known technologies;
- a second kneading step where the pretreated materials are extruded, which can be performed by molten kneading;
- a third co-extrusion step, wherein having obtained the homogenised component mix in the second phase, it is given the final shape of the corresponding structural profile members;
**characterised in that** depending on the composition of the polymer waste used, especially if these are polar and nonpolar polymer mixtures such as PET + PE or PET + PP, the second extrusion step may require the use of an adhesive polymer of those already known and existing the market to facilitate bonding between the polymers of differing polarity.

15. A method for producing structural profile members for producing household utensils according to claim 14, **characterised in that** in order to embellish the surface of the structural profile member and provide it with elements that favour its grip or that are required for subsequent assembly operations, the extrusion nozzle will preferably have two or more layers in co-extrusion covering the handle either totally or partially with polymers of different nature that may be coloured or not, such as PET, PP, PC, TPE (thermoplastic elastomers).

16. A method for producing structural profile members for producing household utensils according to claim 15, **characterised in that** the coating layers mentioned in claim 15 may also be applied after extrusion of the structural profile members using known structural profile members coating technologies using thermoplastic materials or using immersion or spray or other known coating methods with lacquer or paints.
